# EUROPEAN PATENT SPECIFICATION

(11) **EP 4 417 384 B1**
(45) Date of publication and mention of the grant of the patent: **10.12.2025**
(21) Application number: 21940010.8
(22) Date of filing: 27.12.2021
(51) Int. Cl.: B28C 5/42, F16F 15/08, F16F 1/40, F16H 57/028

(54) **SHOCK ABSORBING MECHANISM AND MIXER TRUCK**
STOSSDÄMPFUNGSMECHANISMUS UND MISCHERFAHRZEUG
MÉCANISME D'ABSORPTION DE CHOCS ET CAMION MALAXEUR

(30) Priority: 14.10.2021 CN 202111199703
(43) Date of publication of application: 21.08.2024
(73) Proprietor: Suote Transmission Equipment Co., Ltd., Suzhou, Jiangsu 215500 (CN)
(72) Inventor: ZHU, Shiyuan, Suzhou, Jiangsu 215500 (CN); NI, Chao, Suzhou, Jiangsu 215500 (CN); ZHANG, Lei, Suzhou, Jiangsu 215500 (CN)
(74) Representative: Puchberger & Partner Patentanwälte
(86) International application number: PCT/CN2021/141804
(87) International publication number: WO 2023/060772

(56) References cited:
- CN-A- 103 821 878
- CN-A- 103 821 878
- CN-A- 106 436 561
- CN-A- 113 771 230
- CN-U- 203 189 602
- CN-U- 203 189 602
- DE-A1- 102006 013 372
- DE-A1- 102016 007 077
- JP-A- 2008 223 960

## Description

### CROSS-REFERENCE TO RELATED APPLICATION

The present application claims priority to Chinese Application No. 202111199703.8, filed on October 14, 2021, entitled "Damping Mechanism and Mixer Truck".

### TECHNICAL FIELD

The present application relates to the technical field of mixing bucket damping, in particular to a damping mechanism and a mixer truck.

### BACKGROUND

Concrete mixer truck is a common mechanical equipment used in building construction. A reducer main bearing on it and two supporting wheels behind it support the weight of whole mixing bucket and concrete. Due to the large weight of the mixing bucket and the concrete, the whole mixing bucket will be driven to vibrate during mixing. In addition, bumps caused by potholes in the road or inertial impact caused by a driver's brake will act on the main bearing when the mixer is running. Most of load of the mixing bucket needs to be borne by the main bearing of the reducer and the main bearing needs to bear both radial load and axial load, so it is better if the main bearing of the reducer has a certain automatic self-aligning function. For this reason, the mixing bucket is provided with a self-aligning roller bearing having the self-aligning function as the main bearing to meet deflection demand during an operation of the mixing bucket. The gravity of the mixing bucket and vibration impact on the mixing bucket are all borne by the main bearing, which results in that the main bearing is easily damaged and has a short service life. In addition, the main bearing and a reducer housing are rigidly connected, which easily leads to a cracking of the reducer housing.

In the related art, by providing a damping mechanism, installing the reducer on the damping mechanism, and installing the damping mechanism on a frame of the mixer truck, the horizontal and axial forces caused by the gravity of the mixer truck and the vibration impact can be absorbed. An example is disclosed in DE102006013372A1, which is considered to represent the closest prior art.

The traditional damping mechanism includes a first component, a first elastic component, a second component, a second elastic component and a base provided from top to bottom. The first component is connected to a reducer, the second component is connected to a frame, and the gravity of the mixing bucket is transferred to the first elastic component. The first elastic component absorbs horizontal and axial forces caused by the gravity of the mixing bucket and the vibration impact. However, by the traditional damping mechanism, the reducer cannot deflect at arbitrary angle on the damping mechanism.

### SUMMARY

Therefore, the problem to be solved by the present application is to overcome a defect that a reducer of a traditional mixer truck fails to deflect at arbitrary angle on a damping mechanism.

The present application provides a damping mechanism, including:
a deflection portion, where a bottom surface of the deflection portion is an arc surface;
a support base, having a mounting slot matched with a shape of the bottom surface of the deflection portion, where the deflection portion is rotatably provided in the mounting slot, and a protuberant annular socket portion is provided at a periphery of a top of the mounting slot;
a fixing base, provided on a top of the support base and fixedly connected to the deflection portion;
a bottom plate, provided at a bottom of the support base;
a first damping component, provided between the fixing base and the support base;
a second damping component, provided between the support base and the bottom plate; and
a fastening component, where the fastening component sequentially passes through the bottom plate, the second damping component, the support base, the first damping component and the fixing base from bottom to top.

In an embodiment, according to the damping mechanism mentioned above, a top surface of the deflection portion is provided with a fixing portion which is convex upward or concave internally, a bottom surface of the fixing base (3) is provided with a matching portion, and the matching portion is connected to the fixing portion (11) in an insertion manner and is in interference fit.

In an embodiment, the damping mechanism further includes:
a third damping component, where an upper part of an inner perimeter wall of the third damping component abuts against an outer perimeter wall of the fixing base, a lower part of the inner perimeter wall of the third damping component abuts against an outer perimeter wall of the deflection portion, and the outer perimeter wall of the third damping component abuts against an inner perimeter wall of the annular socket portion.

In an embodiment, according to the damping mechanism mentioned above, the third damping component includes:
a third metal plate, having a round cross section and provided with a positioning portion; where the positioning portion is provided on the annular socket portion to position the third damping component; and
a third elastic component, provided on an inner perimeter wall of the third metal plate, where a bottom of the third elastic component extends out the third metal plate.

In an embodiment, according to the damping mechanism mentioned above, a material of the third elastic component is rubber, an inner perimeter wall of a bottom of the third elastic component is provided with a first ring groove; and/or
an inner perimeter wall of an upper part of the third elastic component is provided with a plurality of deformation slots at intervals.

In an embodiment, the damping mechanism further includes a friction-resistant assembly provided between a bottom wall of the mounting slot and the bottom surface of the deflection portion.

In an embodiment, according to the damping mechanism mentioned above, the bottom wall of the mounting slot is provided with an inserting slot; and the friction-resistant assembly includes:
a friction-resistant pad, having an inserting hole on a middle part; and
a friction-resistant column, where two ends of the friction-resistant column are respectively inserted into the inserting slot and the inserting hole to limit a deflection of the friction-resistant pad relative to the mounting slot.

In an embodiment, according to the damping mechanism mentioned above, the first damping component includes:
two sets of first metal assemblies provided relatively, where each set of the first metal assemblies has multiple layer of first metal plates provided up and down at intervals, and a plurality of first elastic components are respectively provided between each two adjacent layer of the first metal plates; and
a first connecting component, where two ends of the first connecting component are respectively connected to the first metal assemblies on two sides; and/or
the second damping component includes a second elastic component and a second metal plate provided at a bottom of the second elastic component.

In an embodiment, according to the damping mechanism mentioned above, a bottom of each of the first metal assemblies is provided with a positioning boss, and a top surface of the support base is provided with a positioning slot matched with the positioning boss.

The present application provides a mixer truck including any one of the damping mechanisms mentioned above.

Solutions of the present application at least has the following advantages.
1. When using the damping mechanism provided by the present application, the fixing base can be directly used as a housing of a reducer or the fixing base as a member of the damping mechanism can be connected to the housing of the reducer. The support base is connected to a frame of a mixer truck, and gravity and vibration impact force of a mixing bucket are transmitted to the first damping component through the fixing base. The first damping component absorbs horizontal and axial forces caused by the gravity of the mixing bucket and the vibration impact force to ensure a smooth operation of the mixer truck. The fixing base is fixedly connected to the deflection portion, and the reducer is provided on the deflection portion. When the mixing bucket vibrates, the vibration impact force is transmitted to the reducer and the deflection portion, and the deflection portion deflects at arbitrary angle in the mounting slot of the support base to absorb the vibration impact force of the mixing bucket. The damping mechanism has good impact resistance and further improves stability and safety of operation of the mixer truck.
2. The damping mechanism provided by the present application further includes a third damping component, which absorbs the impact force of the deflection portion and partial vibration impact force of the mixing bucket, further improves the damping effect of the damping mechanism and ensures the stability and safety of the mixer truck.

A part of the third elastic component extending out of the third metal plate can be fully deformed after being impacted, and has good damping effect.

The arrangement of a deformation slot and the first ring groove reserves enough space for the deflection and deformation of the third elastic component between the fixing base, the deflection portion and the annular socket portion, which effectively prevents a stress concentration when the third elastic component deforms, and improves the service life of the third elastic component and the third damping component.

3. The damping mechanism provided by the present application is provided with a friction-resistant assembly on a wall of the mounting slot, and the deflection portion is deflected on the friction-resistant assembly to avoid friction damage to the wall of the mounting slot.

4. According to the damping mechanism provided by the present application, an arrangement of the multiple layer of first metal plates improves the overall strength and bearing capacity of the first damping component, which makes the first damping component meet the bearing strength requirements. Two ends of the first connecting component are respectively connected to the two sets of the first metal assemblies on two sides to make the two sets of the first metal assemblies be connected to form a whole structure. Compared with a traditional first damping component, the first damping component 5 provided by the present application can prevent water and dust from entering the damping mechanism through a gap between the damping components to make the damping mechanism have an effect of dustproof and waterproof.

A material of the first connecting component is rubber. An inner wall of the first connecting component is provided with a first concave portion, which reserves space for deformation of the first connecting component to avoid stress concentration during rubber deformation and prevents rubber from being damaged.

5. According to the damping mechanism provided by the present application, a bottom of each of the first metal assemblies is provided with a positioning boss, and a top surface of the support base is provided with a positioning slot matched with the positioning boss. When installing the first damping component, the positioning boss is inserted in the positioning slot to facilitate the installation of the first damping component. When being used, the positioning boss is inserted and positioned in the inserting slot to prevent the deformation and deviation of the first damping component.

6. According to the damping mechanism provided by the present application, the arrangement of the second metal plate improves the strength of the bottom surface of the second damping component, prevents the second elastic component from being screwed concave when a bolt is preloaded, and ensures the buffering effect of the second elastic component.

An inner wall of the second elastic component is provided with a second concave portion, which reserves space for the deformation of the second elastic component to avoid stress concentration during rubber deformation and to prevent rubber from being damaged. The second elastic component is closed and a shape of the second metal plate is the same as that of the second elastic component. The second elastic component is an integral structure, and compared with a traditional second damping component having a splitting structure, it can prevent rainwater or dust from entering the damping mechanism through a gap between the second damping components to make the damping mechanism have an effect of dustproof and waterproof function.

### BRIEF DESCRIPTION OF DRAWINGS

In order to more clearly illustrate the solutions according to the embodiments of the present application or the related art, the accompanying drawings used in the description of the embodiments or the related art will be briefly introduced below. It should be noted that the drawings in the following description are a part of embodiments of the present application. For those of ordinary skill in the art, other drawings can also be obtained according to these drawings without creative efforts.
FIG. 1 is a schematic diagram of a coordination between a damping mechanism provided by embodiment 1 of the present application and a reducer.
FIG. 2 is a sectional view of the damping mechanism provided by embodiment 1 of the present application.
FIG. 3 is a schematic diagram of a support base in FIG. 2.
FIG. 4 is a schematic diagram of a third damping component in FIG. 2.
FIG. 5 is a sectional view of the third damping component in FIG. 2.
FIG. 6 is a schematic diagram of a first damping component in FIG. 2.
FIG. 7 is a sectional view of a first damping component provided by an embodiment of the present application.
FIG. 8 is a schematic diagram of a second damping component in FIG. 2.
FIG. 9 is a sectional view of a second damping component provided by an embodiment of the present application.

Reference numerals: 1-deflection portion; 11-fixing portion; 2-support base; 21-annular socket portion; 22-grease injection hole; 23-inserting slot; 24-mounting portion; 3-fixing base; 31-matching portion; 4-bottom plate; 5-first damping component; 51-first metal assembly; 511-first metal plate; 512-positioning boss; 53-first elastic component; 54-first connecting component; 541-first concave portion; 6-second damping component; 611-second concave portion; 61-second elastic component; 62-second metal plate; 7-fastening component; 8-third damping component; 81-third metal component; 811-flange portion; 82-third metal plate; 821-first ring groove; 822-deformation slot; 91-friction-resistant pad; 92-friction-resistant column; 10-reducer.

### DETAILED DESCRIPTION OF THE EMBODIMENTS

The solutions of the present application will be clearly and completely described below in combination with the accompanying drawings of the present application. It should be noted that, the described embodiments are a part of embodiments of the present application, rather than all the embodiments. Based on the embodiments of the present application, all other embodiments obtained by those of ordinary skill in the art without creative effort fall within the scope of protection of the present application.

In the description of the present application, it is to be noted that, the orientation or positional relations specified by terms such as "central", "upper", "lower", "left", "right", "vertical", "horizontal", "inner", "outer" and the like, are based on the orientation or positional relations shown in the drawings, which is merely for convenience of description of the present application and to simplify description, but does not indicate or imply that the stated devices or components must have the particular orientation and be constructed and operated in a particular orientation, and thus it is not to be construed as limiting the present application. Furthermore, the terms "first", "second", "third" and the like are only used for descriptive purposes and should not be construed as indicating or implying a relative importance.

In the description of the present application, it is to be noted that unless explicitly specified and defined otherwise, the terms "install", "connected to" and "connected" shall be understood broadly, for example, it may be either fixedly connected or detachably connected, or can be integrated; it may be either mechanically connected, or electrically connected; it may be either directly connected, or indirectly connected through an intermediate medium; or it may be either a communication between two components. The specific meanings of the terms above in the present application can be understood by a person skilled in the art in accordance with specific conditions.

In addition, the features involved in different embodiments described below can be combined as long as the features are not conflict to each other.

### Embodiment 1

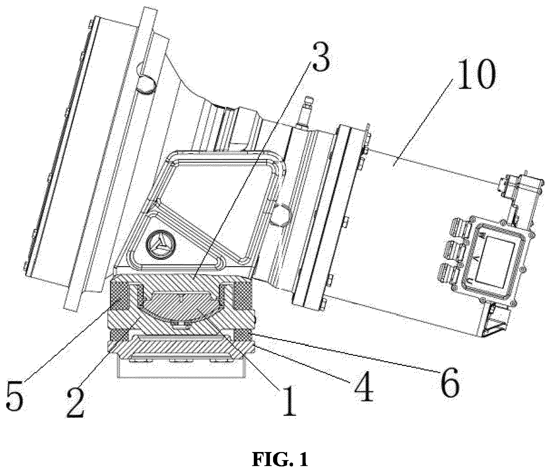

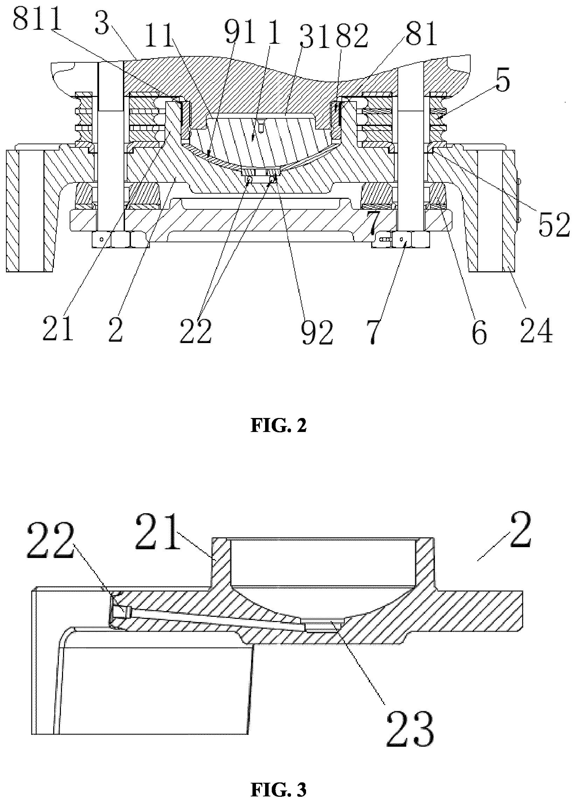

The embodiment provides a damping mechanism, as shown in FIG. 1 and FIG. 2, which includes a deflection portion 1, a support base 2, a fixing base 3, a bottom plate 4, a first damping component 5, a second damping component 6 and a fastening component 7. A bottom surface of the deflection portion 1 is an arc surface. The support base 2 has a mounting slot matched with the shape of the bottom surface of the deflection portion 1, where the deflection portion 1 is rotatably provided in the mounting slot, and a protuberant annular socket portion 21 is provided at a periphery of a top of the mounting slot. The fixing base 3 is provided on a top of the support base 2 and fixedly connected to the deflection portion 1. The bottom plate 4 is provided at a bottom of the support base 2. The first damping component 5 is provided between the fixing base 3 and the support base 2. The second damping component 6 is provided between the support base 2 and the bottom plate 4. The fastening component 7 sequentially passes through the bottom plate 4, the second damping component 6, the support base 2, the first damping component 5 and the fixing base 3 from bottom to top.

According to the damping mechanism provided by this embodiment, when using the damping mechanism, the fixing base 3 can be directly used as a housing of a reducer 10 or the fixing base 3 as a member of the damping mechanism can be connected to the housing of the reducer 10. The support base 2 is connected to a frame of a mixer truck, gravity of a mixing bucket and vibration impact force of the mixing bucket are transmitted to the first damping component 5 through the fixing base 3. The first damping component 5 absorbs horizontal and axial forces caused by the gravity of the mixing bucket and the vibration impact force to ensure a smooth operation of the mixer truck. The fixing base 3 is fixedly connected to the deflection portion 1, and the reducer 10 is provided on the deflection portion 1. When the mixing bucket vibrates, the vibration impact force is transmitted to the reducer 10 and the deflection portion 1, and the deflection portion 1 deflects at arbitrary angle in the mounting slot of the support base 2 to absorb the vibration impact force of the mixing bucket. The damping mechanism has good impact resistance and further improves stability and safety of operation of the mixer truck.

Referring to FIG. 1 and FIG. 2, the arc surface at the bottom of the deflection portion 1 is a part of a sphere, which facilitates the deflection portion 1 to deflect at arbitrary angle. A top surface of the deflection portion 1 is provided with a fixing portion 11 which is convex upward or concave internally, the bottom surface of the fixing base 3 is provided with a matching portion 31, and the matching portion 31 is connected to the fixing portion 11 in an insertion manner and is in interference fit. For example, the top surface of the deflection portion 1 is provided with a cylindrical fixing portion 11 convex upward, and the bottom surface of the fixing base 3 is provided with a circular groove with a circular cross-section. The circular groove is used as the matching portion 31, and the fixing portion 11 is inserted in the circular groove and is in interference fit with the circular groove to connect the fixing portion 11 and the deflection portion 1 into an entirety. The fixing portion 11 and the deflection portion 1 are fixed firmly to ensure that the reducer 10 deflects synchronously with the deflection portion 1.

In an embodiment, referring to FIG. 2, the damping mechanism further includes a third damping component 8 with a round cross-section surface. An upper part of an inner perimeter wall of the third damping component 8 abuts against an outer perimeter wall of the fixing base 3, a lower part of the inner perimeter wall of the third damping component 8 abuts against an outer perimeter wall of the deflection portion 1, and the outer perimeter wall of the third damping component 8 abuts against an inner perimeter wall of the annular socket portion 21. The third damping component 8 is sleeved on outside the deflection portion 1 and the fixing base 3. When the deflection portion 1 deflects, the deflection portion 1 will impact the third damping component 8, and then the third damping component 8 absorbs the impact force of the deflection portion 1 and partial vibration impact force of the mixing bucket to further improve the damping effect of the damping mechanism and ensure the stability and safety of the mixer truck.

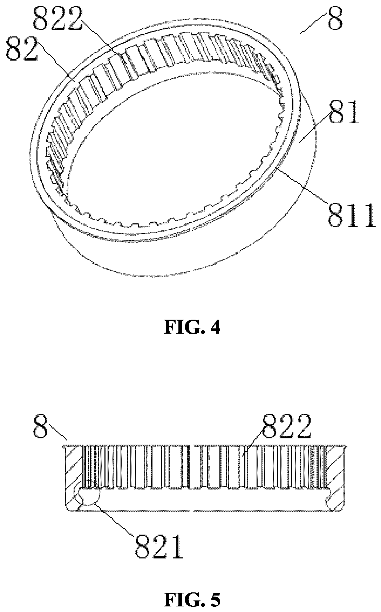

In an embodiment, referring to FIG. 4 and FIG. 5, the third damping component 8 includes a third metal plate 82 and a third elastic component. Cross sections of the third metal plate 82 and the third elastic component are both round. A positioning portion is provided on the third metal plate 82, and the positioning portion is provided on the annular socket portion 21 to position the third damping component 8. For example, the positioning portion is a flange portion 811 provided at a top of the third metal plate 82, and the flange portion 811 is convexly provided on an outer perimeter wall of the third metal plate 82. The flange portion 811 abuts against a top surface of the annular socket portion 21 to position the third damping component 8, so as to prevent the third damping component 8 from moving down, which facilitates the installation and positioning of the third damping component 8. The third elastic component is provided on an inner perimeter wall of the third metal plate 82, and a bottom of the third elastic component extends out the third metal plate 82. A part of the third elastic component extending out of the third metal plate can be fully deformed after being impacted, and has good damping effect.

In an embodiment, a material of the third elastic component is rubber. An inner perimeter wall of the bottom of the third elastic part is provided with a first ring groove 821. The third elastic component on an upper part of the first ring groove 821 abuts against a perimeter wall of the fixing base 3, and the third elastic component on a lower part of the first ring groove 821 abuts against a perimeter wall of the deflection portion 1. An inner perimeter wall of the third elastic component on the top of the first ring groove 821 is provided with a plurality of deformation slots at intervals. In an embodiment, the deformation slots 822 are rectangular slots, and the plurality of deformation slots 822 extend vertically and are provided at equal intervals along the inner perimeter wall of the third elastic component. The arrangement of the deformation slots 822 and the first ring groove 821 reserves enough space for the deflection and deformation of the third elastic component between the fixing base 3, the deflection portion 1 and the annular socket portion 21, which effectively prevents a stress concentration when the third elastic component deforms and improves the service life of the third elastic component and the third damping component 8. For example, the third metal plate 82 is a steel plate, and the third damping component 8 is formed by vulcanizing the rubber and the third metal plate 82. Referring to FIG. 5, the top of the third elastic component is also provided with a flange which abuts against the top surface of the third metal plate 82. The hardness of the third metal plate 82 is greater than that of the third elastic component to support the third elastic component. The third damping component 8 is easy to install and can be positioned through the third metal plate 82. The fixing base 3 is provided with a position-limited step, and the position-limited step is stuck on a top surface of the third damping component 8 to prevent the third elastic component from moving upwards. The position-limited step acts together with the flange portion 811 of the third metal plate 82 to perform the upper and lower limits for the third damping component 8 to prevent the third damping component 8 from moving up and down, and to ensure the damping effect of the third damping component 8 on the deflection portion 1 and the fixing base 3.

Referring to FIG. 1 to FIG. 3, the damping mechanism further includes a friction-resistant assembly which is provided between a bottom wall of the mounting slot and the bottom surface of the deflection portion 1. The support base 2 is a metal casting with soft material and poor wear resistance. By providing the friction-resistant assembly on a wall of the mounting slot, where the friction-resistant assembly is made of a material with better wear resistance, such as a wear-resistant ceramic plate or a high wear-resistant plastic, the deflection portion 1 can deflect on the friction-resistant assembly to avoid friction damage to the wall of the mounting slot.

In an embodiment, the bottom wall of the mounting slot is provided with an inserting slot 23 and the friction-resistant assembly includes a friction-resistant pad and a friction-resistant column 92. The friction-resistant pad is laid on the wall of the mounting slot, and a middle part of the friction-resistant pad has an inserting hole. Two ends of the friction-resistant column 92 are respectively inserted into the inserting slot 23 and the inserting hole to limit a deflection of the friction-resistant pad 91 relative to the mounting slot. For example, the friction-resistant column 92 is cylindrical, and there is a gap between the outer perimeter wall and the inner perimeter wall of the inserting hole of the friction-resistant pad 91. The gap ensures that the friction-resistant pad 91 can rotate relative to the friction-resistant column 92 and deflect at a certain angle, and it can limit an excessive deflection distance of the friction-resistant pad 91 to the outside of the mounting slot to prevent the friction-resistant pad 91 from sliding out of the mounting slot. There is a certain gap between a top surface of the friction-resistant pad 91 and the bottom surface of the third elastic component, which is convenient for the friction-resistant pad 91 to deflect at a certain angle in the mounting slot.

Referring to FIG. 2 and FIG. 3, the support base 2 is provided with a grease injection hole 22. An outer end of the grease injection hole 22 is communicated with the outside, and an inner end of the grease injection hole 22 is communicated with the inserting slot 23 of the support base 2. A through hole is provided on a middle part of the friction-resistant column 92. When using the damping mechanism, the grease is added to the grease injection hole 22 through a butter gun, and the grease flows to the bottom of the deflection portion 1 to lubricate the deflection portion 1 and the friction-resistant pad 91 to reduce the wear of the deflection portion 1 and the friction-resistant pad 91 and improve the service life of the deflection portion 1 and the friction-resistant pad 91.

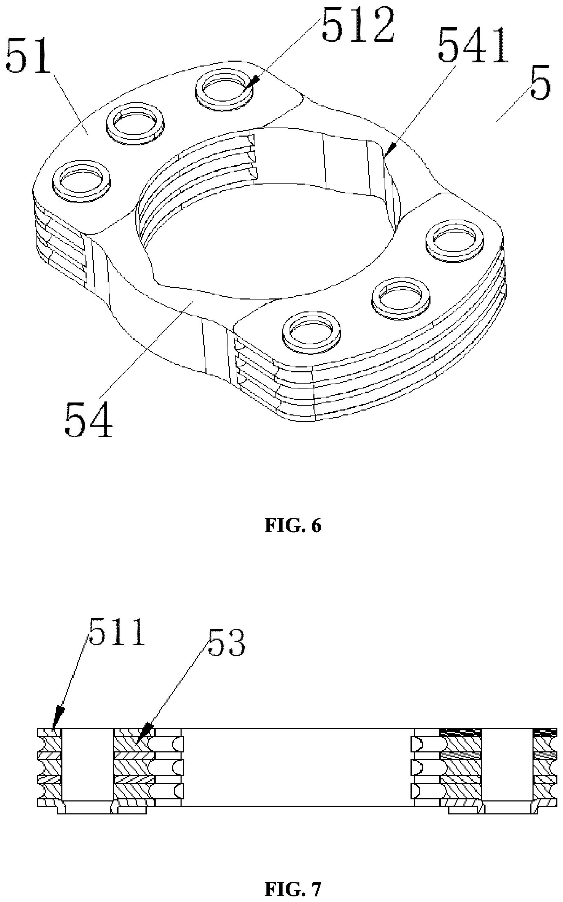

In an embodiment, referring to FIG. 6 and FIG. 7, the first damping component 5 includes two sets of first metal assemblies 51 provided relatively, first elastic components 53 and a first connecting component 54. Each set of the first metal assemblies 51 has multiple layer of first metal plates 511 provided up and down at intervals, and a plurality of first elastic components 53 are respectively provided between each two adjacent layer of the first metal plates 511. For example, the first metal plate 511 is steel plate and the first elastic component 53 is rubber. The position where the first elastic component 53 and the first metal plate 511 are located is a main bearing part. Due to the weight of the mixing bucket is heavy and the first damping component 5 bear larger load, the arrangement of the multiple layer of first metal plates 511 improves the overall strength and bearing capacity of the first damping component 5 and makes the first damping component 5 meet the bearing strength requirements. Two ends of the first connecting component 54 are respectively connected to the two sets of first metal assemblies 51 on two sides to make the two sets of first metal assemblies 51 on two sides be connected to form a whole structure. The first damping component 5 is connected as a whole structure through the first connector 54. A traditional first damping component 5 includes two sets of elastic components provided relatively at intervals. Compared with the traditional first damping component 5, the first damping component 5 provided by this embodiment can prevent water and dust from entering the damping mechanism through a gap between the first damping components 5 to make the damping mechanism have an effect of dustproof and waterproof. The first connecting component 54 is made of rubber, and the first damping component 5 is formed by vulcanizing rubber and multiple layer of steel plates. An inner wall of the first connecting component 54 is provided with a first concave portion 541, which reserves space for deformation of the first connecting component 54, avoids stress concentration during rubber deformation, and prevents rubber from being damaged. The top surface of the first damping component 5 abuts against the fixing base 3, the bottom surface of the first damping component 5 abuts against the support base 2, the first elastic component 53 and the first connecting component 54 are in a pre-compressed state to support the fixing base 3 and withstand the gravity and vibration impact force transmitted by the mixing bucket to the fixing base 3 to have an effect of floating support.

Referring to FIG. 2 and FIG. 6, a bottom of each of the first metal assemblies 51 is provided with a positioning boss 512, and a top surface of the support base 2 is provided with a positioning slot matched with the positioning boss 512. When installing the first damping component 5, the positioning boss 512 is inserted in the positioning slot to facilitate the installation of the first damping component 5. When being used, the positioning boss 512 is inserted and positioned in the inserting slot to prevent the deformation and deviation of the first damping component 5. In an embodiment, the bottom of each of the first metal assemblies 51 is evenly provided with a plurality of positioning bosses 512 at intervals, the number and the position of the positioning slots on the top surface of the support base 2 are matched with that of the positioning bosses.

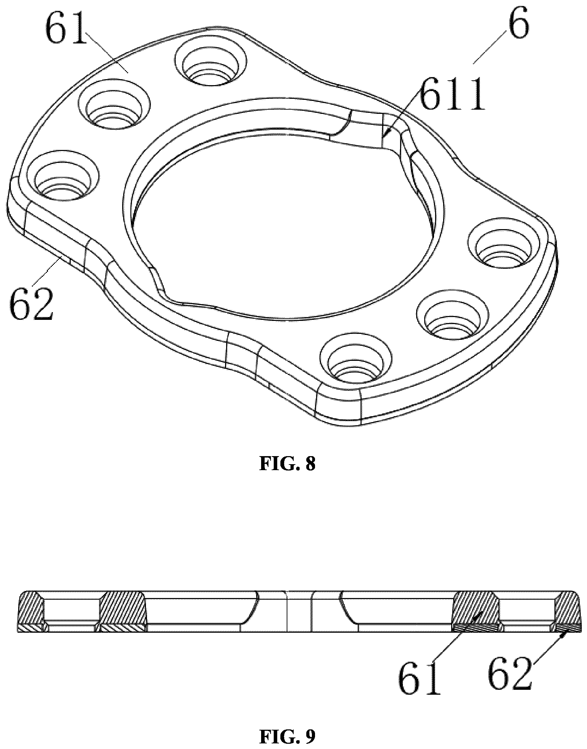

Referring to FIG. 8 and FIG. 9, the second damping component 6 includes a second elastic component 61 and a second metal plate 62 provided at a bottom of the second elastic component 61. For example, the second elastic component 61 is rubber, the second metal plate 62 is steel plate, and the second damping component 6 is formed by vulcanizing the rubber and steel plate. The fastening component 7 is a bolt. The first damping component 5 and the second damping component 6 are provided with a plurality of mounting holes for a plurality of bolts to pass through. The top surface of the second elastic component 61 abuts against the bottom surface of the support base 2, and the bottom surface of the second metal plate 62 abuts against the bottom plate 4. The second elastic component 61 is in a pre-compression state, which is mainly subjected to the pre-tightening force of the bolts and the pressure formed by the deflection of the fixing base 3, and the second damping component 6 does not bear the gravity of the mixing bucket. The arrangement of the second metal plate 62 improves the strength of the bottom surface of the second damping component 6, prevents the second elastic component 61 from being screwed concave when the bolts are preloaded, and ensures the buffering effect of the second elastic component 61. The arrangement of the second damping component 6 enables the lower half of the bolts (the lower half of the fastening component 7 in FIG. 2) and bottom plate 4 to be deflected as a whole with the support base 2 and its above part, so that the upper and lower parts of the bolts are deflected at the same time, which avoids the bolts being only deflected at the upper part to cut the bolts. Referring to FIG. 2, the diameter of the fastening component 7 is less than the diameter of the mounting holes on the first fastening component 7 and the second fastening component 7 to leave enough deflection space for the first elastic component 53 and the second elastic component 61 to prevent the fastening component 7 from squeezing the elastic components.

In an embodiment, the second elastic component 61 is closed, and an inner wall of the second elastic component 61 is provided with a second concave portion 611. For example, there are two second concave portions 611, and the two second concave portions 611 are opposite and provided on the inner wall of the second elastic component 61. The second concave portions 611 reserve space for the deformation of the second elastic component 61 to avoid stress concentration during the deformation of rubber and to prevent rubber from being damaged. The second elastic component 61 is closed and a shape of the second metal plate 62 is the same as that of the second elastic component 61. The second elastic component 61 is an integral structure, and compared with a traditional second damping component 6 having a splitting structure, it can prevent rainwater or dust from entering the damping mechanism through a gap between the second damping components 6 to make the damping mechanism have an effect of dustproof and waterproof.

In an embodiment, the first elastic component 53, the second elastic component 61 and the third elastic component can be made of latex or spring steel, as long as it can absorb the horizontal or axial forces caused by the gravity of the mixing bucket or the vibration impact force. The first damping component 5 and the second damping component 6 can also be butterfly springs, and the third damping component 8 can be spring coil or rubber ring.

In an embodiment, the positioning portion can also be a convex portion provided on the outer wall of the third metal plate. Correspondingly, the inner wall of the annular socket portion 21 is provided with a concave portion, and the convex portion is inserted in the concave portion to position the third damping component 8 on the annular socket portion 21.

### Embodiment 2

The embodiment provides a mixer truck, which includes the damping mechanism and the reducer 10 of embodiment 1. The reducer 10 is provided on the damping mechanism. The outer edge of the support base 2 is provided with a mounting portion 24 bending downward, and the mounting portion 24 is provided with a plurality of threaded holes. Bolts pass through the mounting portion 24 and the threaded holes on the truck frame to fix the support base 2 on the truck frame.

The fixing base 3 on the mixer truck of this embodiment 2 is fixedly connected to the deflection portion 1. The reducer 10 is provided on the deflection portion 1. When the mixing bucket vibrates, the vibration impact force is transmitted to the reducer 10 and the deflection portion 1. The deflection portion 1 deflects at arbitrary angle in the mounting slot of the support base 2 to absorb the vibration impact force of the mixing bucket. The damping mechanism has good impact resistance and improves the stability and safety of the mixer truck.

It should be noted that the above embodiments are only examples for clear description, and are not limitations of the embodiments. For those skilled in the art, other different forms of modifications or replacements may be made on the basis of the above description. It is not necessary and cannot be exhaustive to show all embodiments. Any apparent modifications or replacements arising therefrom shall remain within the scope of this application, as defined by the appended claims .

## Claims

1. A damping mechanism, comprising:
a deflection portion (1), wherein a bottom surface of the deflection portion (1) is an arc surface;
a support base (2), having a mounting slot matched with a shape of the bottom surface of the deflection portion (1), wherein the deflection portion (1) is rotatably provided in the mounting slot, and a protuberant annular socket portion (21) is provided at a periphery of a top of the mounting slot;
a fixing base (3), provided on a top of the support base (2) and fixedly connected to the deflection portion (1);
a bottom plate (4), provided at a bottom of the support base (2);
a first damping component (5), provided between the fixing base (3) and the support base (2);
a second damping component (6), provided between the support base (2) and the bottom plate (4); and
a fastening component (7), wherein the fastening component (7) sequentially passes through the bottom plate (4), the second damping component (6), the support base (2), the first damping component (5) and the fixing base (3) from bottom to top.

2. The damping mechanism according to claim 1, a top surface of the deflection portion (1) is provided with a fixing portion (11) which is convex upward or concave internally, a bottom surface of the fixing base (3) is provided with a matching portion (31), and the matching portion (31) is connected to the fixing portion (11) in an insertion manner and is in interference fit.

3. The damping mechanism according to claim 2, further comprising:
a third damping component (8), wherein an upper part of an inner perimeter wall of the third damping component (8) abuts against an outer perimeter wall of the fixing base (3), a lower part of the inner perimeter wall of the third damping component (8) abuts against an outer perimeter wall of the deflection portion (1), and the outer perimeter wall of the third damping component (8) abuts against an inner perimeter wall of the annular socket portion (21).

4. The damping mechanism according to claim 3, wherein the third damping component (8) comprises:
a third metal plate (82), having a round cross section and provided with a positioning portion; wherein the positioning portion is provided on the annular socket portion (21) to position the third damping component (8); and
a third elastic component, provided on an inner perimeter wall of the third metal plate (82), wherein a bottom of the third elastic component extends out the third metal plate (82).

5. The damping mechanism according to claim 4, a material of the third elastic component is rubber, an inner perimeter wall of a bottom of the third elastic component is provided with a first ring groove (821); and/or
an inner perimeter wall of an upper part of the third elastic component is provided with a plurality of deformation slots (822) at intervals.

6. The damping mechanism according to any one of claims 1-5, further comprising a friction-resistant assembly provided between a bottom wall of the mounting slot and the bottom surface of the deflection portion (1).

7. The damping mechanism according to claim 6, the bottom wall of the mounting slot is provided with an inserting slot (23); and the friction-resistant assembly comprises:
a friction-resistant pad (91), having an inserting hole on a middle part; and
a friction-resistant column (92), wherein two ends of the friction-resistant column (92) are respectively inserted into the inserting slot (23) and the inserting hole to limit a deflection of the friction-resistant pad (91) relative to the mounting slot.

8. The damping mechanism according to any one of claims 1-7, the first damping component (5) comprises:
two sets of first metal assemblies (51) provided relatively, wherein each set of the first metal assemblies (51) has multiple layer of first metal plates (511) provided up and down at intervals, and a plurality of first elastic components (53) are respectively provided between each two adjacent layer of the first metal plates (511); and
a first connecting component (54), wherein two ends of the first connecting component (54) are respectively connected to the first metal assemblies (51) on two sides; and/or
the second damping component (6) comprises a second elastic component (61) and a second metal plate (62) provided at a bottom of the second elastic component (61).

9. The damping mechanism according to claim 8, a bottom of each of the first metal assemblies (51) is provided with a positioning boss (512), and a top surface of the support base (2) is provided with a positioning slot matched with the positioning boss (512).

10. A mixer truck, comprising the damping mechanism according to any one of claims 1-9.

## Patentansprüche

1. Dämpfungsmechanismus, umfassend:
einen Umlenkabschnitt (1), wobei eine Bodenfläche des Umlenkabschnitts (1) eine gebogene Fläche ist;
eine Trägerbasis (2) mit einer einer Form der Bodenfläche des Umlenkabschnitts (1) korrespondierenden Montageaussparung; wobei der Umlenkabschnitt (1) drehbar in der Montageaussparung vorgesehen ist und ein hervorstehender ringförmiger Sockelabschnitt (21) am Umfang einer Oberseite der Montageaussparung vorgesehen ist;
eine Fixierbasis (3), die auf einer Oberseite der Trägerbasis (2) vorgesehen ist und fest mit dem Umlenkabschnitt (1) verbunden ist;
eine Bodenplatte (4), die am Boden der Trägerbasis (2) vorgesehen ist;
eine erste Dämpfungskomponente (5), die zwischen der Fixierbasis (3) und der Trägerbasis (2) vorgesehen ist;
eine zweite Dämpfungskomponente (6), die zwischen der Trägerbasis (2) und der Bodenplatte (4) vorgesehen ist; und
eine Befestigungskomponente (7), wobei die Befestigungskomponente (7) von unten nach oben nacheinander durch die Bodenplatte (4), die zweite Dämpfungskomponente (6), die Trägerbasis (2), die erste Dämpfungskomponente (5) und die Fixierbasis (3) verläuft.

2. Dämpfungsmechanismus nach Anspruch 1, wobei eine obere Fläche des Umlenkabschnitts (1) mit einem Fixierabschnitt (11) vorgesehen ist, der konvex nach oben oder konkav nach innen ist, eine Bodenfläche der Fixierbasis (3) mit einem korrespondierenden Abschnitt (31) vorgesehen ist, und der korrespondierende Abschnitt (31) mit dem Fixierabschnitt (11) steckverbunden und in Interferenzpassung ist.

3. Dämpfungsmechanismus nach Anspruch 2, ferner umfassend:
eine dritte Dämpfungskomponente (8), wobei ein oberer Teil einer Innenumfangswand der dritten Dämpfungskomponente (8) an einer Außenumfangswand der Fixierbasis (3) anliegt, ein unterer Teil der Innenumfangswand der dritten Dämpfungskomponente (8) an einer Außenumfangswand des Umlenkabschnitts (1) anliegt, und die Außenumfangswand der dritten Dämpfungskomponente (8) an einer Innenumfangswand des ringförmigen Sockelabschnitts (21) anliegt.

4. Dämpfungsmechanismus nach Anspruch 3, wobei die dritte Dämpfungskomponente (8) Folgendes umfasst:
eine dritte Metallplatte (82), die einen runden Querschnitt aufweist und mit einem Positionierabschnitt vorgesehen ist; wobei der Positionierabschnitt an dem ringförmigen Sockelabschnitt (21) vorgesehen ist, um die dritte Dämpfungskomponente (8) zu positionieren; und
eine an einer Innenumfangswand der dritten Metallplatte (82) vorgesehene dritte elastische Komponente, wobei der Boden der dritten elastischen Komponente aus der dritten Metallplatte (82) herausragt.

5. Dämpfungsmechanismus nach Anspruch 4, wobei ein Material der dritten elastischen Komponente Gummi ist, eine Innenumfangswand eines Bodens der dritten elastischen Komponente mit einer ersten Ringnut (821) vorgesehen ist; und/oder
eine Innenumfangswand eines oberen Teils der dritten elastischen Komponente in Abständen mit einer Vielzahl von Deformationsschlitzen (822) vorgesehen ist.

6. Dämpfungsmechanismus nach einem der Ansprüche 1 bis 5, ferner umfassend eine reibungsbeständige Anordnung, die zwischen einer Bodenwand der Montageaussparung und der Bodenfläche des Umlenkabschnitts (1) vorgesehen ist.

7. Dämpfungsmechanismus nach Anspruch 6, wobei die Bodenwand der Montageaussparung mit einer Einführaussparung (23) vorgesehen ist, und die reibungsbeständige Anordnung Folgendes umfasst:
eine reibungsbeständige Auflage (91) mit einem Einführloch in einem Mittelteil, und
eine reibungsbeständige Säule (92), wobei zwei Enden der reibungsbeständigen Säule (92) jeweils in die Einführaussparung (23) und das Einführloch eingeführt sind, um ein Umlenken der reibungsbeständigen Auflage (91) relativ zu der Montageaussparung zu beschränken.

8. Dämpfungsmechanismus nach einem der Ansprüche 1 bis 7, wobei die erste Dämpfungskomponente (5) Folgendes umfasst:
zwei relativ zueinander vorgesehene Sätze erster Metallanordnungen (51), wobei jeder Satz der ersten Metallanordnungen (51) mehrere Schichten erster Metallplatten (511) aufweist, die in Abständen oben und unten vorgesehen sind, und eine Vielzahl von ersten elastischen Komponenten (53) jeweils zwischen zwei nebeneinanderliegenden Schichten der ersten Metallplatten (511) vorgesehen ist; und
eine erste Verbindungskomponente (54), wobei zwei Enden der ersten Verbindungskomponente (54) jeweils mit den ersten Metallanordnungen (51) an zwei Seiten verbunden sind; und/oder
die zweite Dämpfungskomponente (6) eine zweite elastische Komponente (61) und eine zweite Metallplatte (62), die an einem Boden der zweiten elastischen Komponente (61) bereitgestellt ist, umfasst.

9. Dämpfungsmechanismus nach Anspruch 8, wobei ein Boden von jeder der ersten Metallanordnungen (51) mit einem Positioniervorsprung (512) vorgesehen ist, und eine obere Fläche der Trägerbasis (2) mit einem mit dem Positioniervorsprung (512) korrespondierenden Positionierschlitz vorgesehen ist.

10. Fahrmischer, umfassend den Dämpfungsmechanismus nach einem der Ansprüche 1 bis 9.

## Revendications

1. Mécanisme d'amortissement, comprenant :
une partie de déviation (1), dans laquelle une surface inférieure de la partie de déviation (1) est une surface arquée ;
une base de support (2), comportant une fente de montage correspondant à la forme de la surface inférieure de la partie de déviation (1), dans laquelle la partie de déviation (1) est montée de manière rotative dans la fente de montage, et une partie de douille annulaire saillante (21) est prévue à la périphérie d'une partie supérieure de la fente de montage ;
une base de fixation (3), prévue sur le dessus de la base de support (2) et reliée de manière fixe à la partie de déviation (1) ;
une plaque inférieure (4), prévue au bas de la base de support (2) ;
un premier élément d'amortissement (5), prévu entre la base de fixation (3) et la base de support (2) ;
un deuxième élément d'amortissement (6), prévu entre la base de support (2) et la plaque inférieure (4) ;
et un élément de fixation (7), dans lequel l'élément de fixation (7) traverse successivement la plaque inférieure (4), le deuxième élément d'amortissement (6), la base de support (2), le premier élément d'amortissement (5) et la base de fixation (3) de bas en haut.

2. Mécanisme d'amortissement selon la revendication 1, une surface supérieure de la partie de déviation (1) est prévue avec une partie de fixation (11) qui est convexe vers le haut ou concave à l'intérieur, une surface inférieure de la base de fixation (3) est prévue avec une partie d'accouplement (31), et la partie d'accouplement (31) est reliée à la partie de fixation (11) par insertion et est en ajustement serré.

3. Mécanisme d'amortissement selon la revendication 2, comprenant en outre :
un troisième élément d'amortissement (8), dans lequel une partie supérieure d'une paroi périphérique intérieure du troisième élément d'amortissement (8) vient en butée contre une paroi périphérique extérieure de la base de fixation (3), une partie inférieure de la paroi périphérique intérieure du troisième élément d'amortissement (8) vient en butée contre une paroi périphérique extérieure de la partie de déviation (1), et la paroi périphérique extérieure du troisième élément d'amortissement (8) vient en butée contre une paroi périphérique intérieure de la partie de douille annulaire (21).

4. Mécanisme d'amortissement selon la revendication 3, dans lequel le troisième élément d'amortissement (8) comprend :
une troisième plaque métallique (82), ayant une section transversale ronde et pourvue d'une partie de positionnement ; dans lequel la partie de positionnement est prévue sur la partie de douille annulaire (21) pour positionner le troisième élément d'amortissement (8) ; et
un troisième élément élastique, prévu sur une paroi périphérique intérieure de la troisième plaque métallique (82), dans lequel une partie inférieure du troisième élément élastique s'étend hors de la troisième plaque métallique (82).

5. Mécanisme d'amortissement selon la revendication 4, un matériau du troisième élément élastique est du caoutchouc, une paroi périphérique intérieure d'une partie inférieure du troisième élément élastique est pourvue d'une première rainure annulaire (821) ; et/ou
une paroi périphérique intérieure d'une partie supérieure du troisième élément élastique est pourvue d'une pluralité de fentes de déformation (822) à intervalles.

6. Mécanisme d'amortissement selon l'une quelconque des revendications 1 à 5, comprenant en outre un ensemble résistant au frottement prévu entre une paroi inférieure de la fente de montage et la surface inférieure de la partie de déviation (1).

7. Mécanisme d'amortissement selon la revendication 6, la paroi inférieure de la fente de montage est pourvue d'une fente d'insertion (23) ; et l'ensemble résistant au frottement comprend :
un patin résistant au frottement (91), comportant un trou d'insertion sur une partie centrale ; et
une colonne résistante au frottement (92), dans laquelle les deux extrémités de la colonne résistante au frottement (92) sont respectivement insérées dans la fente d'insertion (23) et le trou d'insertion afin de limiter la déviation du patin résistant au frottement (91) par rapport à la fente de montage.

8. Mécanisme d'amortissement selon l'une quelconque des revendications 1 à 7, le premier élément d'amortissement (5) comprenant :
deux ensembles de premiers ensembles métalliques (51) fournis de manière relative, dans lesquels chaque ensemble de premiers ensembles métalliques (51) comporte plusieurs couches de premières plaques métalliques (511) disposées vers le haut et vers le bas à intervalles réguliers, et une pluralité de premiers éléments élastiques (53) sont respectivement fournis entre chaque paire de couches adjacentes des premières plaques métalliques (511) ; et
un premier élément de connexion (54), dans lequel les deux extrémités du premier élément de connexion (54) sont respectivement connectées aux premiers ensembles métalliques (51) sur deux côtés ; et/ou
le deuxième élément d'amortissement (6) comprend un deuxième élément élastique (61) et une deuxième plaque métallique (62) prévue au bas du deuxième élément élastique (61).

9. Mécanisme d'amortissement selon la revendication 8, le fond de chacun des premiers ensembles métalliques (51) est pourvu d'un bossage de positionnement (512), et la surface supérieure de la base de support (2) est pourvue d'une fente de positionnement correspondant au bossage de positionnement (512).

10. Camion malaxeur, comprenant le mécanisme d'amortissement selon l'une quelconque des revendications 1 à 9.
